# EUROPEAN PATENT APPLICATION

(11) **EP 2 775 447 A1**
(43) Date of publication of application: **10.09.2014**
(21) Application number: 12846565.5
(22) Date of filing: 30.10.2012
(51) Int. Cl.: G06Q 50/10, A01M 1/10

(54) **METHOD AND SYSTEM FOR CONTROLLING AND ELIMINATING PESTS**

(30) Priority: 01.11.2011 BR PI1104356
(71) Applicant: Attax Dedetização Desratização S/C Ltda. Me, 04612-060 São Pualo-SP (BR)
(72) Inventor: GALEB, Alexandre, CEP-04612-060 São Paulo-SP (BR)
(74) Representative: Ramos Lucas, Maria Manuel
(86) International application number: PCT/BR2012/000423
(87) International publication number: WO 2013/063670

(57) **Abstract**

The invention comprises a plurality of traps fitted with data processing means, arranged in a given coverage area, said traps comprising specific traps for rodents, specific traps for flying insects and specific traps for crawling insects. The data processing means include animal presence sensors, means for processing the information provided by said sensors and means for communicating said information, as well as power supply means. According to another aspect of the invention the traps in a given area are superintended by a master station that oversees the operation of said "slave" traps, via said information communication means. The aforesaid area superintended by a master station may include different kinds of traps, i.e. a single area may simultaneously contain specific traps for rodents, specific traps for flying insects and specific traps for crawling insects, said traps being identified by codes that indicate the kind of pest the trap is used for.

## Description

### Field of the invention

The instant invention refers to the control of pests in urban environments, comprising commercial or industrial buildings as well as warehouses for storing agricultural products, and more specifically to the control and elimination of rodents such as mice and rats as well as flying or crawling insects.

### Description of related art

Infestation by pests such as rats, mice, crawling and flying insects and the like is a problem which has faced humankind for many thousands of years, occurring in dwellings, in commercial and industrial facilities as well as being associated with all aspects of agricultural activities. Besides destroying part of the feedstuffs in the field and in the storage facilities, these animals may act as vectors for diseases affecting humans and cattle. Besides eating grains growing in the field as well as foodstuffs stored in processing facilities, rodents such as rats and mice transmit bubonic plague, leptospirosis and other serious diseases.

There also many ways in which insects can bring about losses. For instance, mosquitoes belonging to genera Aedes, Culex, Anopheles and Lutzomyia are vectors of dengue, yellow fever, malaria and leishmaniasis. Common houseflies transmit several infectious diseases such as typhoid fever, cholera, dysentery, parasitic diseases and so on. Horseflies attack cattle, causing infections, weigh loss, death of young steers and impairment of the quality of the leather. Cockroaches can carry viruses, fungi, bacteria and protozoa besides being intermediate hosts for parasitic worms, besides attacking stored foodstuffs.

Several means are known for controlling these and other vermin, each one being directed to the elimination of a specific animal such as, for instance, the traditional mouse and rat traps which are triggered when a rodent tries to consume a bait placed in a mechanical triggering device. Notwithstanding their simplicity, such traps need to be handled with care and can wound the user when set up improperly.

A modern alternative to conventional mousetraps are devices which use electricity to kill the trapped rodent. Patent US3197916 *Electric Animal Trap* discloses a trap comprising a compartment whose floor is made of wires of opposite electric polarities. The entrance of this compartment is provided with a door that closes automatically retaining the animal inside. The rodent is electrocuted as its feet make contact with wires of opposite electrical polarities, and can be removed by opening the cover of said compartment. Among the shortcomings of this trap is the need to connect it to the mains, due to the fact that batteries do not provide the amount of power needed for electrocution. Moreover, traps must be checked periodically, due to the fact that it does not alert remotely that an animal has been trapped.

Patent application US2003131522 *Electronic Animal Trap* discloses a battery-powered trap which does away with the need for a mains connection. After the circuit is switched on by the detection and electrocution of a rodent, the system turn itself off in order to avoid accidents with children or pets. Re-activation is possible only by removal of the dead body, which becomes an obstacle to the entrance of additional animals, rendering the trap useless for further electrocution of rodents. There is no remote communication that the trap has been sprung, therefore an operator must inspect the traps periodically in order to remove the dead animals and to reset the trap circuits. Moreover, the trap has no means for monitoring the charge condition of the battery, which must be checked with an instrument carried by the operator during the aforesaid inspections.

Figure 1 shows an example of a known trap disclosed in Brazilian patent document PI0802080, which is widely employee for controlling rats and mice. It comprises a main body part 2 and a cover 3, said body being provided with two access apertures 4 and 5, for entrance and exit of the rodent, as well as a rod to hold a poisoned bait. As described in said document, the animal enters the trap attracted by the bait; after consuming it, it leaves the trap through one of said apertures and later dies due to the poison's effect. One shortcoming of said trap is the need for regular inspections to check the condition of the bait and eventually placing a fresh one. Moreover, the animal may die inside the trap, blocking the entrance of other rodents and reducing the effectiveness of the invention in view of the fact that access to the trap will be restored only after said inspection and removal of the dead rodent.

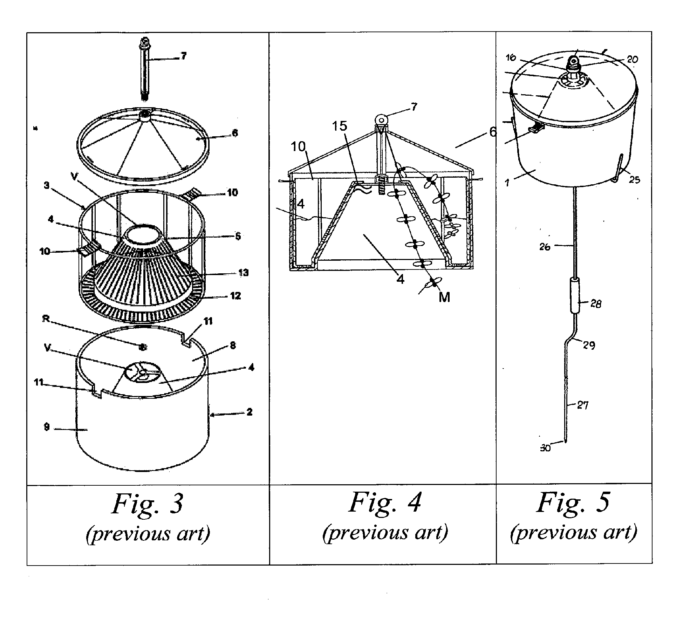

Many traps for flying insects are based in a cone-shaped element such as shown in figures 3, 4 and 5. Figure 3 is an exploded view of the trap disclosed in patent application BR8800309-4 Disposição Aplicada em Armadilha para Moscas e Insetos Dipteros em Geral *(Arrangement Applied in Trap for Flies and Dipterous Insects* in *General).* As shown in the drawings, the trap comprises a vessel generally shaped as a cylinder 9, over whose lower base rests a truncated cone 4 provided, in its upper base V, with openings that allow an insect to go through. The void between the inner wall of the cylinder and the outer wall of the truncated cone is shaped as a circular channel 15 filled in part with a liquid that attracts insects 14. As shown in Figure 4, an insect M is attracted by the liquid's odor and enters the trap flying upward inside the truncated cone. After passing through the apertures in said upper base V the insect remains imprisoned in void 15 and eventually falls into the liquid 14 where it drowns. For use in closed spaces, the trap can be suspended by eyelet 7. Figure 5 shows the arrangement used outdoors, such as in gardens for instance, comprising a supporting element 25 associated with a vertical rod 26 whose lower end is inserted into the ground.

To inspect the trap's conditions the insect retaining element, i.e. the sieve 3 is lifted by the tabs 10, in order to avoid loss of the attractant solution 14. A shortcoming of this trap is the fact that the period between inspections may be too short for trapping a substantial amount of insects. Moreover, the number of insects retained in the sieve has to be counted by the operator, a time-consuming activity whose accuracy depends on the operator's ability.

In brief, the state of the art traps have in common the drawback of not allowing a straightforward estimate of the extent of vermin infestation in the locality in which the traps are deployed, allowing only a rough approximation of the number of trapped pests based on the results of the operator's manual inspections. In point of fact, due to the fact that the existence of rodents or insects is only substantiated when the dead animals are removed during the regular inspections, said estimate is subject to substantial errors, due to the fact that it depends on the frequency of said inspections. On the other hand, it may happen that the amount of trapped animals is very small or even nonexistent. This may entail a waste of human resources, mainly when the traps are placed at a distance from the base of operations.

### Objects of the invention

In view of the preceding, the instant invention aims to provide a method and a system for plague control that furnishes reliable estimation of the number of animals infesting a locality.

Another object of the invention is to provide a method and system whereupon the operator will be assigned only when an animal has effectively been trapped.

Another object of the invention is to provide a method and system in which the sensing of the presence of an animal does not entail its trapping or elimination.

Another object of the invention is to provide a system that does not depend upon external power sources, such as the mains.

Another object of the invention is to provide a method and system in which the conditions of the elements and components in the traps can be ckecked remotely.

Finally, another object of the invention is to provide a method and system which is not specific to the nature of the trapped animal.

### Summary of the invention

The above mentioned objects are fulfilled by the invention by means of a system comprising a plurality of traps provided with data processing means, deployed over a specified locality, said traps comprising traps for catching rodents, traps for catching flying insects and traps for catching crawling insects.

According to another aspect of the invention said data processing means comprise means for sensing an animal's presence, means for processing data furnished by said sensing means, and communication means as well as power supply means.

According to another aspect of the invention, the traps distributed over a specific locality are subordinate to a master station which oversees the operation of said slave traps, by means of said communication means.

According to another aspect of the invention said communication means comprise radio-frequency links.

According to another aspect of the invention said slave traps comprise units for detecting as well as units for eliminating pests.

According to another aspect of the invention said slave units kill the trapped animals.

According to another aspect of the invention said power supply means comprise at least one electric battery.

According to another aspect of the invention said power supply means comprise a connection to the mains or to an alternative power source such as wind turbines, solar cells or thermo-electric generators.

According to another aspect of the invention each slave unit is provided with hardware and software for detecting the presence of pests, battery voltage checking means and means for checking the operation of at least one pest sensing device.

According to another aspect of the invention the method of the invention comprises the regular polling of the slave units superintended by a master unit, said polling comprising the transmission by said master units of query messages to each slave unit and the reception by said master unit of the corresponding answering messages transmitted by each slave unit.

According to another aspect of the invention said answering messages comprise a slave unit identification portion, said portion including a code that identifies the kind of trap.

According to another aspect of the invention occurrence of events related to the identification of an animal in the slave unit are immediately informed to the master unit independently of said pooling.

According to another aspect of the invention said event may consist of the detection of an animal's entrance and exit on the presence detection device, or the detection of the animal's entrance on the elimination unit.

According to another aspect of the invention the data processing means in the insect traps add up the events indicating an animal's presence and originate a message to the master unit when the total number of said events reach a threshold value.

According to another aspect of the invention said total is related to the number of insects trapped by a slave unit.

According to another aspect of the invention the method comprises the operator's dealing with the slave unit that originated an event, such as the removal of a trapped or dead animal, changing the battery pack, the substitution or repair of an electronic component or replenishing the attractive liquid or resupplying the bait.

According to another aspect of the invention the vermin elimination units are provided with animal retention means.

According to another aspect of the invention said animal retention means comprise a surface covered with an attractive sticking layer.

According to another aspect of the invention, said animal retention means consists of an attractive liquid.

### Brief description of the drawings

Further features and advantages of the invention will be clarified in the following description of particular embodiments of the invention, reference being made to the accompanying figures in which:
Fig. 1 shows a state of the art rodent trap.
Fig. 2 shows the placement of sensing elements and an electronic module in the trap shown in Fig. 1, so as to constitute a slave unit that detects the presence of rodents.
Fig.3 is an exploded view of a state of the art trap for flying insects.
Fig. 4 shows how a insect is trapped and killed in the trap shown in Fig. 3.
Fig. 5 shows the assembled insect trap and the supporting device for placement over the ground.
Fig. 6 depicts the trap shown in Fig. 2 with its lid closed.
Fig. 7 is the block diagram of a slave unit.
Fig. 8 shows a general view of a rodent killing trap.
Fig. 9 is an inside view of the trap depicted in the previous figure.
Figures 10 and 11 show two possible practical embodiments of the rodent sensing element.
Fig. 12 is a block diagram of the master unit.
Fig. 13a is a general view of the master unit.
Fig. 13b exemplifies the deployment of the system of the invention in a commercial depot.
Fig. 14 exemplifies a general plague control system.
Fig. 15 exemplifies the management by a vermin control organization of a plurality of systems such as the one shown in Fig. 14.

### Detailed description

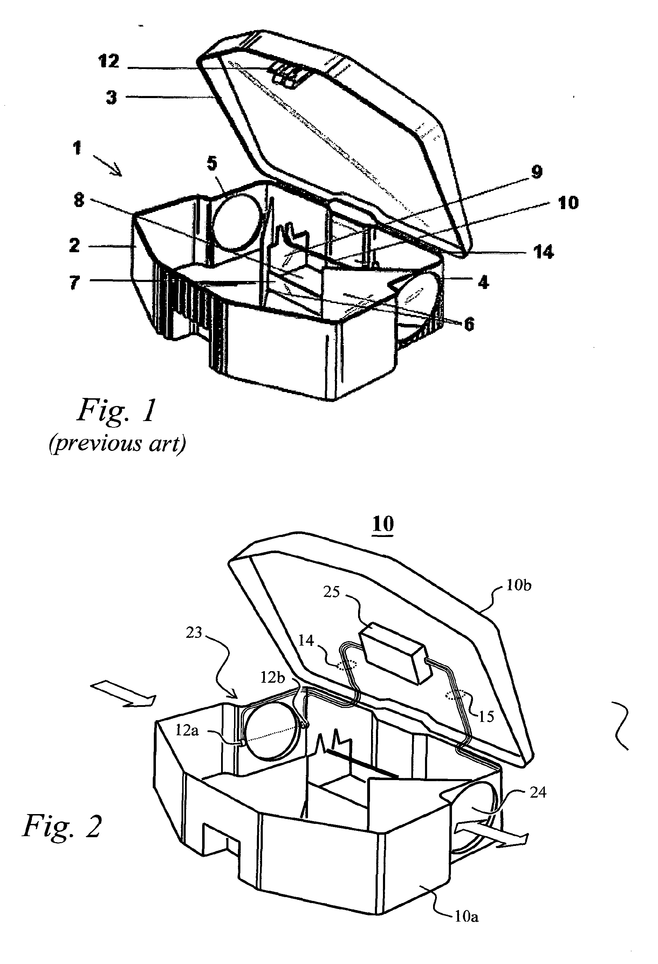

Referring now to figures 2, 6 and 7, slave unit 10 is set up in a commercially available plastic enclosure consisting of a lower body 10a and a lid 10b. Although the figures show a specific enclosure, any other commercially available case may be used, as long as it is provided with two openings 23 and 24 for entry end exit of the rodent. As shown in Fig. 2, opening 23 is provided with an infrared sensing device comprising an infrared emitting diode 12a and a detector 12b which are connected by a pair of wires 14 to a controlling device 25 fastened to the internal surface of lid 10b. A similar sensing assembly (not shown in the drawing) is placed in opening 24 and is connected to the same controlling device by means of wires 15. A state of the art processor 11 in said controlling device 25 manages the events related to the entry and exit of a rodent through said openings.

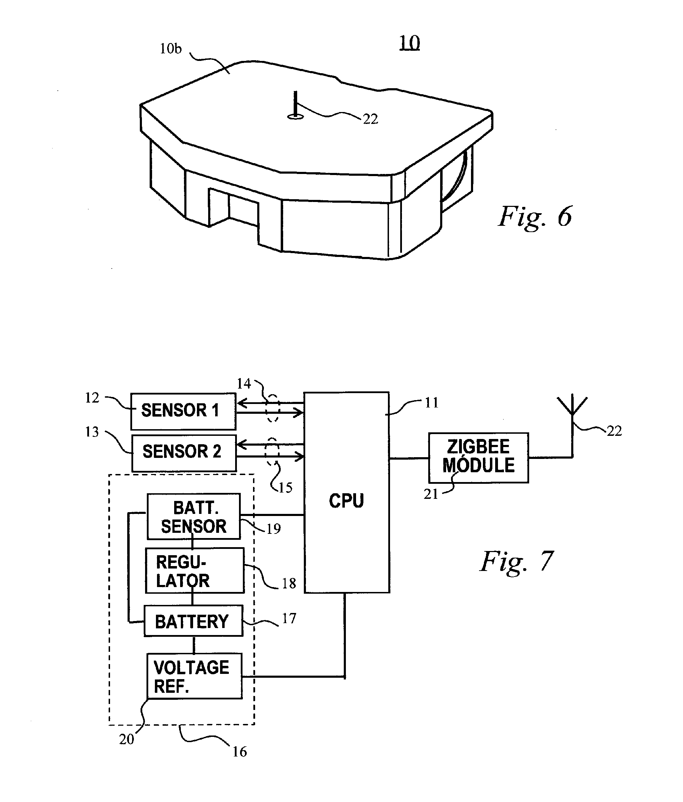

As shown in block diagram of Fig. 7, the electronic components of the slave unit are powered by power supply 16, comprising a battery 17, a voltage regulator 18, a battery condition sensing circuit 19 and a voltage reference 20. Said battery (not shown in figures 2 and 6) furnishes a non-regulated voltage to regulator 18, which outputs a stabilized voltage of 3.3 volts. Battery condition sensing circuit 19 forwards to the CPU 11 the charge level of the battery, while the voltage reference component 20 provides a voltage of 2.5V to enable the CPU to monitor the real battery voltage.

Besides monitoring the rodent entry and exit events and the amount of charge in the battery, CPU 11 also checks the integrity of the components comprising the infrared sensing devices. This is done by checking the response of detecting diode 12b (as well as corresponding diode 3b, not shown) to a flash of light emitted by diode 12a (and 13b, not shown). The absence of said response shows a defect or malfunction in one of the components of the sensing device.

Data indicating the battery charge level as well as the sensing assemblies components are stored in the memory (not shown) associated to CPU 11, said data being transmitted by a RF link to the master unit by transceiver device 21. In a preferred embodiment of the trap, said device is a commercially available Zig-Bee module, which has a typical communication range of 150 meters. In case of sites covering large areas, modules covering greater distances may be employed. As shown in figures 6 and 7, transceiver 21 is connected to antenna 22 which is placed over lid 10b. In an alternative embodiment, said antenna may consist of conductive tracks placed over the inside surface of said lid, as is known in the art.

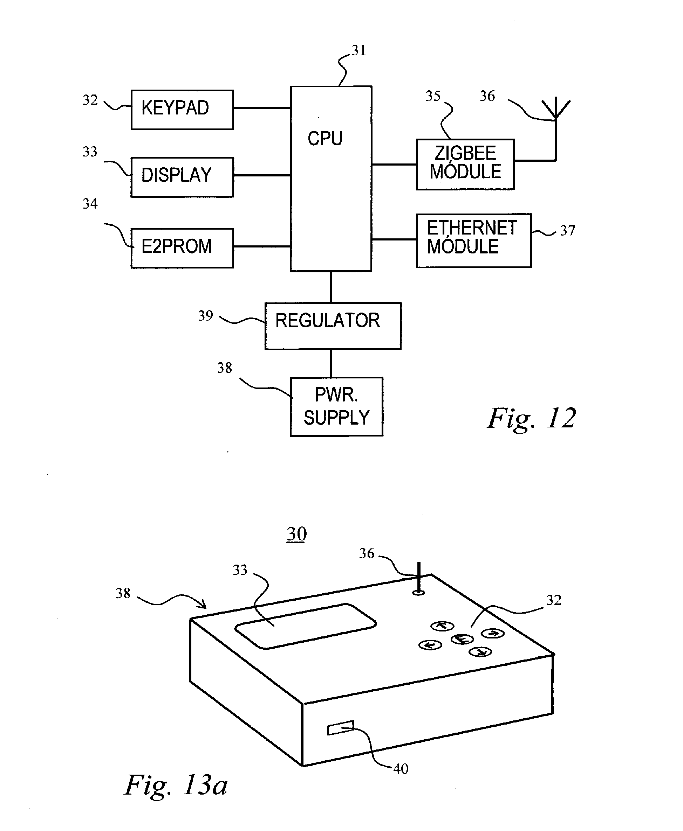

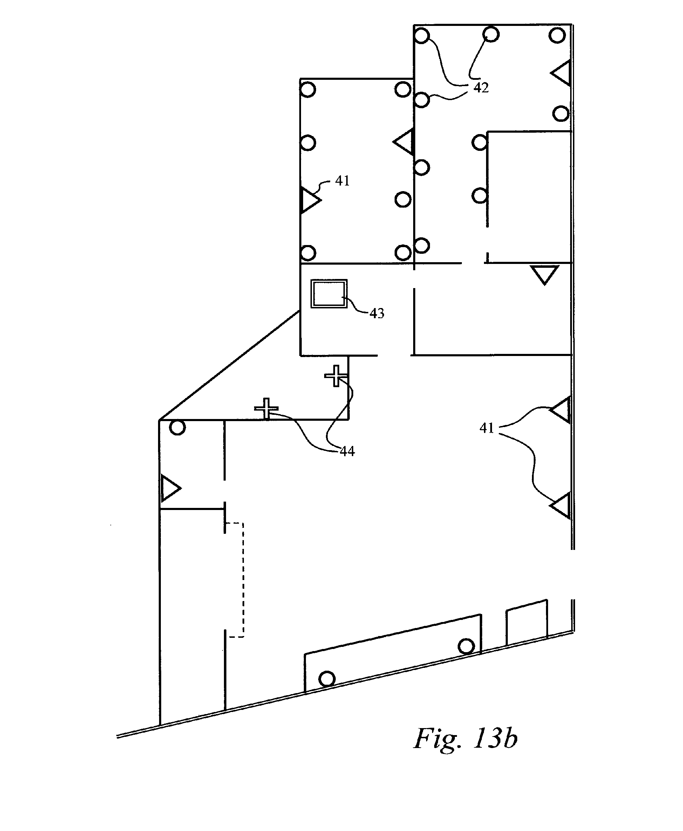

Master unit 30 block diagram is shown in Fig. 12, and comprises a keypad 32, a display 33, an E2PROM 34, an Ethernet module 37 and a Zig-Bee RF transceiver 35 coupled to antenna 36. All these circuits are controlled by CPU 31, which is powered by external power supply 38 and voltage regulator 39. Keypad 32 comprises 5 keys, right, left, up and down and an enter key, which are used to navigate on the menus shown in said display, which show the status of the equipment. Memory component E2PROM 34 stores information received from slave units, mainly the ones related to events occurring in said units. Said memory 34 can store information related to one month operation of the system. Ethernet module 37 provides communication with Internet, to which it is connected through a cable by means of RJ45 connector 40. Module 35 is a Zig-Bee transceiver which communicates with the slave units by means of a RF link. Fig. 13 shows a general view of the master unit.

Insect traps such as shown in figures 3, 4 and 5 can also be adapted to operate as slave units, by fixing a sensor in vertex V (through which the insects pass when entering the trap), and attaching the processing and communication module to a convenient spot, such as the inside wall of truncated cone 4.

In a preferred embodiment of the invention, the processing module's CPU counts the number of insect entries into the trap. Upon reaching a limit, a message is generated and transmitted to the master unit. Said unit contacts the site of the vermin control organization in order that an operator be assigned to go to said trap for changing the vermin retaining element, i.e. the sieve 3.

As regards crawling insects, such as roaches, the traps known in the art are shaped like tunnels, in which the inside surface is covered with an attractive sticking material. Upon entering said trap, the insect becomes attached to said material. Such devices can easily be adapted to function as slave units by setting up a movement sensor at each opening of the trap, as well as a processing and communication module like the ones shown in figures 2 and 7. Said units also count the number of trapped insects and generates a spontaneous alarm message upon reaching a preset limit.

According to the invention a plurality of slave units under control of a master unit will be distributed over a specific locality, all such units being within the range of the RF communications link, which is roughly 150 meters. At regular intervals the master unit polls the slave units, sending interrogation messages which must be answered by each unit in order to confirm its presence in the system. The answering messages comprise the identification of the slave unit, the battery charge level and the condition of the sensing devices such as 12a and 12b. Master unit's software comprises a subroutine in which the battery charge is compared with the levels informed in previous messages, and a "charge level versus time" curve may be plotted, allowing to predict when the battery will have to be substituted. Said information is transmitted by the master unit to the system's central management.

An event may be characterized by the interruption of the IR beam in one of the openings of a slave unit, which indicates that the presence of an animal has been detected in said unit. This is immediately reported to the master unit by a message that includes the time and the date of the event, as well as the battery status. Upon receiving such information, the master unit contacts the system's central management site through the Internet and forwards the data related to said event. The data is processed in order to produce a statistic analysis showing how many animals have been detected by each slave unit. This allows to optimize the distribution of the slave units.

Fig. 13b exemplifies the placement of a plurality of slave units in a commercial establishment, such as a warehousing facility. In this figure, triangles 41 stand for units that detect the presence of rodents, while circles 42 stand for rodent elimination units. Out-of-doors areas, such as gardens, are provided with flying insects traps 44. All the slave units are connected through RF links to the master unit 43, which is located in a convenient place, such as the warehouse administration office, where there usually exists means for connecting to the Internet as well as electric mains for powering the equipment.

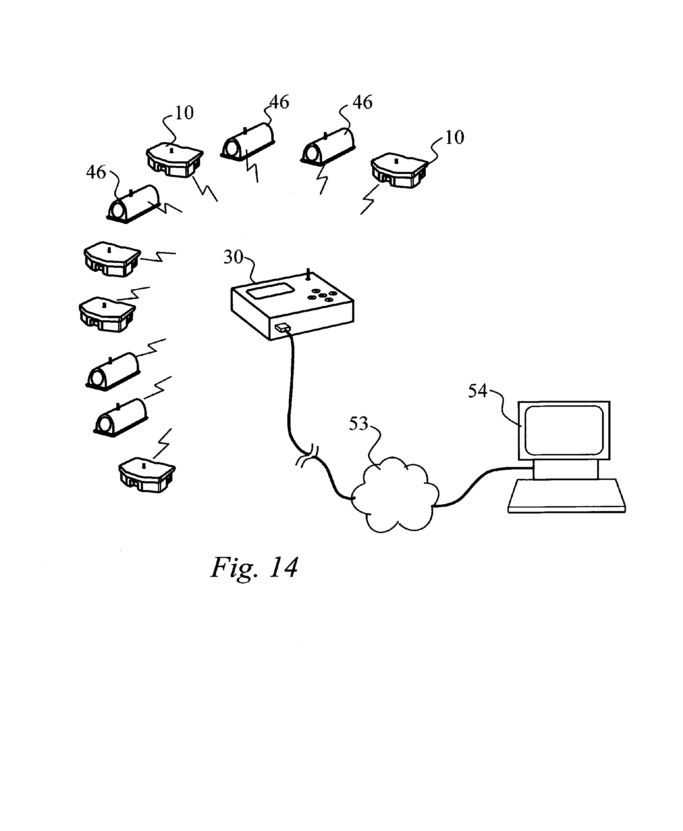

Fig. 14 shows how the units forming a basic system are interrelated. As shown, the system comprises a plurality of slave units-such as rodent detecting units, rodent elimination units and flying insects trapping units - are deployed within the communications range of a master unit 30. Informations collected by regular polling are forwarded to the system's central management 55 by one or more of the following means: wire link, Internet connection 53, fixed telephone line, cellphone mobile connection or limited private radio service. Said central management has means for producing reports and analyses of the systems superintended by it, as well as being provided by material and human resources required for keeping said systems in working order.

When a message is received, either by the master unit or by the central management, notifying the need of corrective action in a unit of a specific system, an operator is assigned to said unit in order to carry out the necessary corrective action, which may comprise:
- disposal of an animal trapped by a slave unit 46;
- replacement of a nearly discharged battery;
- repairing a slave unit having defective IR detecting device, CPU or transceiver.

Said message may be generated at a slave unit due to an event occurring thereon - such the trapping of a rodent, the reaching of the limit in an insect trap or the malfunction of component in the sensing device - or at a master unit when a "charge level versus time" curve shows that a battery needs replacement, or a malfunction in the communication links between slave units and master unit or between the latter and the central management 55.

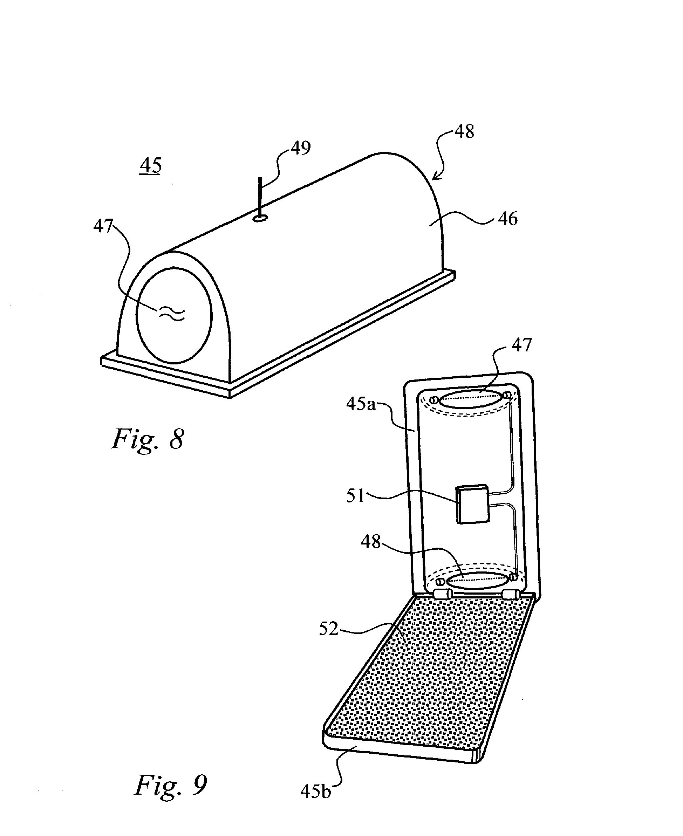

Figures 8 and 9 depict a rodent elimination unit, usually shaped like a tunnel with openings 46 and 47 at both ends. In Fig. 9, that shows the unit with the lid in an open position, it can be seen that the trap comprises a lid portion 46a attached by a hinge to a base portion 46b. Said openings are provided in the lid, each one being furnished with a sensing device 47, 48 that detect the entrance of a rodent into the trap. Said base portion is coated with an adhesive layer 52 to which the animal sticks and is held captive until being removed by an operator.

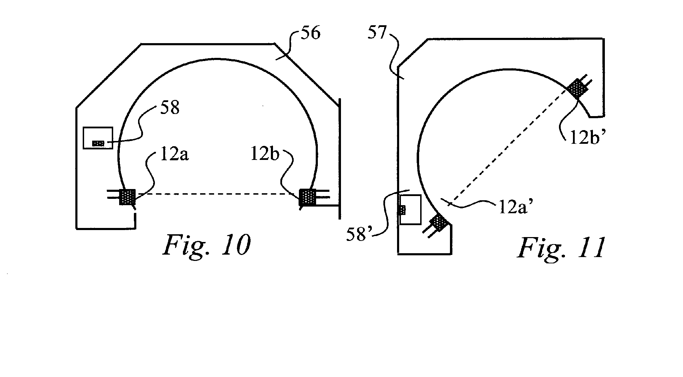

The component arrangement of a presence sensing device such as employed in slave unit 10 is shown in Fig. 10, and comprises a board 56 of insulating material, such as a phenolic or glass-epoxy laminate fashioned with a central aperture in whose edges are placed the photo-emitting diode 12a and the photo-detector 12b, which are connected by printed conductors to a connector 58, into which the termination of connecting cable 14 or 15 (not shown) is inserted, the other end of said cable being connected to the slave unit's CPU (not shown). An alternative embodiment of said device is shown in Fig. 11 which differs from the one previously disclosed by the shape of the board 57, while the photo-emitting diode 12a' and the photo-detector 12b' as well as connector 58' equivalent to the correspondent components shown in the previous figure.

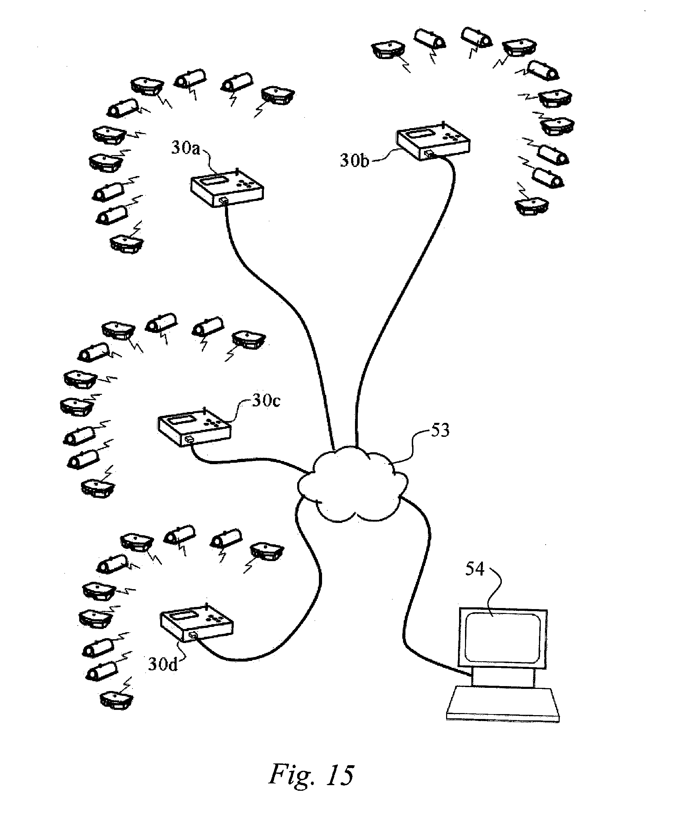

Fig. 15 shows an installation in which several plague control systems such as the one shown in Fig. 14 are managed by a vermin control organization central office 55, which is connected to the master units 30a, 30b, 30c, 30d of each system by means of the Internet 53. Said connection can also be provided by either a cellphone communications system, a conventional fixed telephone network, or private limited RF link. Said systems may be associated either with different clients, such as a store, a supermarket, a factory, a warehouse and so on, or with one client whose facilities cover a large area which cannot be serviced by a single plague control system. Whatever the situation the master units have identifying codes allowing to pick out and service any unit of the whole installation.

All the data related to the detection of events are stored in the organization's central office computer and are processed in order to provide reports and statistics that result in a more effective management of the system. Said reports allow the identification of critical items, particular times, and so on.

While certain features of the invention have been illustrated and described herein, many modifications, substitutions, changes and equivalents will now occur to those of ordinary skill in the art. It is, therefore, to be understood that the appended claims are intended to cover all such modifications and changes as falling within the true spirit of the invention.

## Claims

1. A system for controlling and eliminating pests comprising at least one master unit (30) superintending a plurality of slave units (10, 45) deployed in a specific area **characterized by** the fact that each slave unit comprises data processing means (11, 25, 51) and communication means (21, 22, 49) as well as being provided with baited trapping means selected from the group that comprises rodent traps (10), flying insects traps and crawling insects traps, wherein said slave stations are identified by a code which informs the specific kind of pest to which each station is destined.

2. A system as claimed in claim 1, **characterized by** the fact that said data processing means comprise means (12, 13) for sensing an animal's presence, means (11) for processing data furnished by said sensing means and communication means (21, 22) as well as power supply means (16).

3. A system as claimed in claim 1, **characterized by** the fact that said communication means comprise radio-frequency links.

4. A system as claimed in claim 2, **characterized by** the fact that said power supply means (16) comprise at least one electric battery (17).

5. A system as claimed in claim 2, **characterized by** the fact that said power supply means comprise a connection to an external power source an alternative power source, selected from the group that comprises electric power mains, wind turbines, solar cells and thermo-electric generators.

6. A system as claimed in claim 1, **characterized by** the fact that said slave units (10) comprise means for detecting the presence of pests (12, 13, 47, 48).

7. A system as claimed in claim 1, **characterized by** the fact that said slave units(45, 46) comprise means (52) for killing pests.

8. A system as claimed in claim 1, **characterized by** the fact that said slave units (10, 45, 46) comprise means for simultaneously detecting and killing pests.

9. A system as claimed in claim 1, **characterized in that** it comprises the central office of a vermin control organization (55), connected to a plurality of master units (30a, 30b, 30c, 30d) each one of which superintends a plurality of slave units, wherein said connection is made by means selected from the group that comprises a wire link, Internet connection 53, fixed telephone line, cellphone mobile connection or limited private radio service.

10. A method for controlling and eliminating pests employing a system comprising at least a master unit (30) superintending a plurality of slave units (10, 45, 46), said slave units being provided with traps comprising sensing means (12, 13, 45) for detecting animals, means (25, 51) for processing data furnished by said sensing means, RF communication means (21, 22), power supply means (16) and baiting means, **characterized by** the fact that said slave unit detects animals, measures the voltage furnished by said power supply means and checks the operation of said sensing means.

11. A method as claimed in claim 10, **characterized by** the fact that it comprises the exchange of messages between a master unit (30) and the slave units (10, 45, 46), wherein the messages transmitted from each slave unit to the master unit by RF link comprise information related to the detection of animals by the sensing means in the trap, the voltage of the power supply and the condition of the components in said sensing means.

12. A method as claimed in claim 11, **characterized by** the fact that the messages originating in the slave units (10, 45, 46) are answering messages in response to interrogation messages transmitted by the master unit (30).

13. A method as claimed in claim 11, **characterized by** the fact that said messages originating in said slave units (10, 45, 46) are spontaneously generated upon occurrence of events related to the identification of an animal in said slave unit.

14. A method as claimed in claim 11, **characterized by** the fact that the messages transmitted from the slave units (10, 45, 46) to the master unit (30) comprise an identification code, a portion of which identifies the specific kind of pest to which each station is destined.

15. A method as claimed in any of the preceding claims **characterized by** the fact that upon receipt of a message notifying the need of corrective action in a unit of a specific system, an operator is assigned to said unit in order to carry out the necessary corrective action, said action comprising the removal of a trapped or dead animal, changing the battery pack, the substitution or repair of an electronic component or restoring the bait.
